(19) Europäisches Patentamt
European Patent Office
Office européen des brevets

(11) Veröffentlichungsnummer: **0 263 067**
**A2**

(12) # EUROPÄISCHE PATENTANMELDUNG

(21) Anmeldenummer: **87810550.1**

(22) Anmeldetag: **23.09.87**

(51) Int. Cl.⁴: **C 08 G 59/06**
C 08 G 59/24

(30) Priorität: **29.09.86 US 912722**

(43) Veröffentlichungstag der Anmeldung:
**06.04.88 Patentblatt 88/14**

(84) Benannte Vertragsstaaten: **DE FR GB IT**

(71) Anmelder: **CIBA-GEIGY AG**
**Klybeckstrasse 141**
**CH-4002 Basel (CH)**

(72) Erfinder: **Gannon, John A.**
**7 Elmcrest Drive**
**Danbury, CT 06811 (US)**

**Puglisi, Joseph S.**
**P.O. Box 335 Forest Lane**
**Crompond New York 10541 (US)**

**Brytus, Vincent**
**RFD 3- Box 437 Hamlin Road**
**Mahopac New York 10541 (US)**

**Payne, Kenneth L.**
**779 Warburton Avenue**
**Yonkers New York 10701 (US)**

(54) **Vorverlängertes Epoxidharz aus einem Diglycidyläther eines disekundären Diols und einem zweiwertigen Phenol.**

(57) Vorverlängerte Epoxidharze werden durch Umsetzung von Diglycidyläthern mit zweiwertigen Phenolen hergestellt, wobei die erhaltenen Epoxidharze mit Heisshärtungsmitteln für Epoxidharze Beschichtungsmittel mit hervorragenden physikalischen Eigenschaften darstellen.

EP 0 263 067 A2

**Beschreibung**

Vorverlängertes Epoxidharz aus einem Diglycidyläther eines disekundären Diols und einem zweiwertigen Phenol

Es ist bekannt, durch sogenannte Vorverlängerung, das heisst, Umsetzung von relativ niedrigmolekularen und tiefschmelzenden oder flüssigen Epoxidharzen mit polyfunktionellen Verbindungen, höhermolekulare und höherschmelzende Epoxidharze herzustellen. Durch die Vorverlängerung erreicht man auch eine Modifizierung der Verarbeitungseigenschaften, so dass die vorverlängerten Epoxidharze für bestimmte Anwendungen besser geeignet sind.

Es wurde nun gefunden, dass man durch Vorverlängerung von Diglycidyläthern disekundärer Diole mit zweiwertigen Phenolenl Epoxidharze erhält, die sich besonders gut als Kleb- und Beschichtungsmittel anwenden lassen und die daraus hergestellten Verklebungen und Beschichtungen vorteilhafte mechanische und chemische Eigenschaften aufweisen.

Gegenstand vorliegender Erfindung sind somit vorverlängerte Epoxidharze, erhältlich durch Umsetzung von (1) Diglycidyläthern disekundärer Diole der Formel I

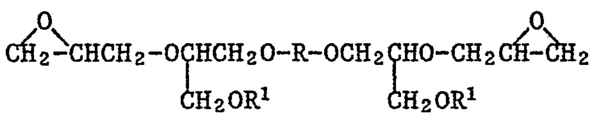

(I),

worin R ein Phenylen, Naphthylen oder einen zwei oder drei Phenylene enthaltenden Rest bedeutet, wobei die Phenylene über eine einfache Bindung, -O-, -S-, $-SO_2-$, -SO-, -CO- oder ein Alkylen mit 1 bis 5 C-Atomen gebunden sind und jedes Phenylen oder Naphthylen gegebenenfalls am Ring durch ein oder zwei Alkyle mit 1 bis 6 C-Atomen oder durch 1 oder 2 Chlor- oder Bromatome substituiert sein kann, und jedes $R^1$ ein lineares oder verzweigtes, gegebenenfalls durch 1 bis 4 Chlor- oder Bromatome substituiertes Alkyl mit 1 bis 16 C-Atomen, ein lineares oder verzweigtes, gegebenenfalls durch 1 bis 4 Chlor-oder Bromatome substituiertes Alkenyl mit 2 bis 6 C-Atomen, ein gegebenenfalls am Ring durch ein oder zwei Chlor- oder Bromatome oder 1 oder 2 Alkylene mit 1 bis 4 C-Atomen substituiertes Phenyl oder Naphthyl mit gesamthaft 6 bis 12 C-Atomen, ein gegebenenfalls am Ring durch 1 oder 2 Chlor- oder Bromatome oder 1 oder 2 Alkyle mit 1 bis 4 C-Atomen substituiertes Phenylalkyl oder Naphthylalkyl mit gesamthaft 7 bis 12 C-Atomen, ein einkerniges Cycloalkyl mit 3 bis 6 C-Atomen oder ein einkerniges Cycloalkylalkyl mit 4 bis 10 C-Atomen bedeutet, mit (2) zweiwertigen Phenolen.

Vorzugsweise haben in der Formel I beide $R^1$ die gleiche Bedeutung und stehen je für ein Alkyl mit 1 bis 14 C-Atomen, Alkyl, Cyclohexyl oder Benzyl.

Weitere bevorzugte Verbindungen der Formel I sind solche, worin R ein m- oder p-Phenylen oder einen zwei Phenylene enthaltenden Rest bedeutet, wobei die beiden Phenylene in o,o'-, o,p'- oder p,p'-Stellung durch ein Alkylen mit 1 bis 4 C-Atomen miteinander verbunden sind.

Besonders bevorzugt sind solche Verbindungen der Formel I, worin R einen Rest der Formel

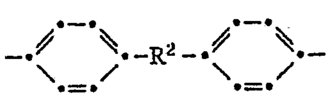

darstellt, worin $R^2$ für Methylen oder Isopropylen steht, und solche, worin jedes $R^1$ ein Alkyl mit 1 bis 12 C-Atomen, insbesondere 2 bis 6 C-Atomen, bedeutet.

Als spezifische Beispiele für die Diglycidyläther der Formel I seien genannt:
2,2-Bis-[p-(3-butoxy-2-glycidyloxypropyloxy)-phenyl]-propan,
2,2-Bis-[p-(3-methoxy-2-glycidyloxypropyloxy)-phenyl]-propan,
2,2-Bis-[p-(3-äthoxy-2-glycidyloxypropyloxy)-phenyl]-propan,
2,2-Bis-[p-(3-dodecyloxy-2-glycidyloxypropyloxy)-phenyl]-propan,
2,2-Bis-[p-(3-tetradecyloxy-2-glycidyloxypropyloxy)-phenyl]-propan,
2,2-Bis-[p-(3-benzyloxy-2-glycidyloxypropyloxy)-phenyl]propan,
Bis-[p-(3-butoxy-2-glycidyloxypropyloxy)-phenyl]-methan,
1,3-Bis-(3-phenoxy-2-glycidyloxypropyloxy)-benzol,
Bis-[p-(3-butoxy-2-glycidyloxypropyloxy)-phenyl]-sulfon,
2,2-Bis-[p-(3-cyclohexyloxy-2-glycidyloxypropyloxy)-phenyl]-propan,
2,2-Bis-[4-(3-butoxy-2-glycidyloxypropyloxy)-3,5-dibromphenyl]-propan,
2,2-Bis-[p-(3-allyloxy-2-glycidyloxypropyloxy)-phenyl]-propan und
2,2-Bis-[p-(3-phenoxy-2-glycidyloxypropyloxy)-phenyl]-propan.

Die zur Herstellung der vorverlängerten Epoxidharze verwendeten Diglycidyläther der Formel I sind aus dem US-Patent 4,284,574 bzw. EP-Patent 22 073 bekannt.

Vorzugsweise verwendet man als zweiwertige Phenole solche, die der Formel II

HO-X-OH (II)
entsprechen, worin X für 1,2-Phenylen, 1,3-Phenylen, 1,4-Phenylen oder

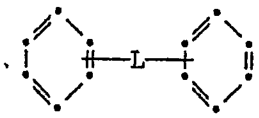

steht, worin L für eine direkte Bindung, ein Alkylen mit 1 bis 6 C-Atomen, ein Alkyliden mit 2 bis 6 C-Atomen oder $-SO_2-$steht.

Beispiele solcher Phenole sind die Bisphenole F, A und S, Catechin, Resorcin, o,o'- und p,p'-Biphenol. Die verschiedenen Phenole können gegebenenfalls ringsubstituiert sein, zum Beispiel mit nichtreaktiven Substituenten wie Halogen oder Alkyl. Als Verbindung der Formel II verwendet man insbesondere Bisphenol A.

Zur Herstellung der vorverlängerten Epoxidharze werden die Diglycidyläther der disekundären Diole in Mengen von 70 bis 95 Gewichts-%, vorzugsweise von 75 bis 90 Gewichts-%, bezogen auf das vorverlängerte Harz, eingesetzt. Entsprechend wird das zweiwertige Phenol in Mengen von 30 bis 5 Gewichts-%, vorzugsweise von 25 bis 10 Gewichts-%, bezogen auf das vorverlängerte Harz, eingesetzt. Die angegebenen Mengen der Reaktionskomponenten sind erforderlich, damit vorverlängerte Epoxidharze mit geeigneten Molekulargewichten erhalten werden.

Die Vorverlängerungsreaktion als solche ist bekannt und wird im allgemeinen durchgeführt, indem man den Diglycidyläther mit dem Phenol in Gegenwart eines Vorverlängerungskatalysators oder -beschleunigers umsetzt. Typische Beschleuniger sind beispielsweise Alkalihydroxide, Imidazole und Phosphoniumverbindungen. die Wahl des einzelnen Beschleunigers richtet sich nach der beabsichtigten Endanwendung des vorverlängerten Epoxidharzes. Zur Erleichterung des Vermischens der Reaktionskomponenten kann gewünschtenfalls der Diglycidyläther auf 90 bis 120°C erhitzt werden und man gibt dann das zweiwertige Phenol zu. Unter Rühren erhält man dann eine klare Schmelze. Der Katalysator bzw. Beschleuniger wird dann der Schmelze zugegeben, und die Temperatur wird auf 130 bis 180°C angehoben, wobei die Vorverlängerungsreaktion eintritt. Das Fortschreiten dieser Reaktion wird mittels Titration von Proben aus dem Reaktionsgemisch verfolgt. Die Reaktion dauert im allgemeinen 2 bis 15 Stunden und ergibt Epoxidharze mit einem Epoxidgehalt von 0,01-0,2 Epoxidäquivalenten/100 g Harz. Die vorverlängerten Epoxidharze sind entweder viskos oder stellen klebfreie Festharze dar.

Die erfindungsgemässen, vorverlängerten Epoxidharze können mit den gebräuchlichen Härtungsmitteln durch Erhitzen ausgehärtet werden, wobei unlösliche und unschmelzbare Stoffe mit technisch wertvollen Eigenschaften erhalten werden. Gegenstand der vorliegenden Erfindung sind somit auch heisshärtbare Mischungen, enthaltend ein erfindungsgemässes, vorverlängertes Epoxidharz und ein Härtungsmittel für Epoxidharze.

Als Härtungsmittel können beispielsweise di- oder polyfunktionelle Isocyanate, Melamin-Formaldehydharze, Harnstoff-Formaldehydharze oder Phenol-Formaldehydharze eingesetzt werden, wobei man die zuvorgenannten Formaldehydharze bevorzugt verwendet.

Die Menge des eingesetzten Härtungsmittels richtet sich nach der chemischen Natur des Härtungsmittels und nach den gewünschten eigenschaften der härtbaren Mischung und des gewünschten Produktes. Die optimale Menge des Härtungsmittels kann vom Fachmann leicht ermittelt werden. Beispielsweise können die Härtungsmittel im Bereich von 5 bis 20 Gewichts-%, bezogen auf das vorverlängerte Harz, eingesetzt werden.

Die erfindungsgemässen, härtbaren Mischungen können vor dem Härten mit üblichen Modifizierungsmitteln, wie beispielsweise mit Streckmitteln, Füllstoffen und Verstärkungsmitteln, Pigmenten, Farbstoffen, organischen Lösungsmitteln, Weichmachern, Mitteln zur Beeinflussung der Klebrigkeit, Kautschuken, Härtungsbeschleunigern oder Verdünnungsmitteln, versehen werden. Zu den Streckmitteln, Verstärkungsmitteln, Füllstoffen und Pigmenten, die in den erfindungsgemässen härtbaren Mischungen verwendet werden können, zählen beispielsweise Kohleteer, Bitumen, Glasfasern, Borfasern, Kohlefasern, Cellulose, Polyethylenpulver, Polypropylenpulver, Glimmer, Asbest, Quarzmehl, Gips, Antimontrioxid, Bentone, Talkum, Kieselgel (Aerosil®), Lithopone, Baryt, Calciumcarbonat, Titandioxid, Russ, Graphit, Eisenoxid oder Metallpulver, wie beispielsweise Aluminiumpulver oder Eisenpulver. Es können noch weitere übliche Zusätze den erfindungsgemässen Mischungen zugesetzt werden, wie beispielsweise Mittel zur Erhöhung der Flammfestigkeit, Thixotropiemittel, Mittel zur Kontrolle der Fliesseigenschaften, beispielsweise Silikone, Celluloseacetatbutyrat, Polyvinylbutyrat, Wachse oder Stearate. Solche Zusätze werden teilweise als Entformungsmittel verwendet.

Gegebenenfalls verwendete Beschleuniger können identisch mit denen bei der Vorverlängerung eingesetzten sein oder können beispielsweise auch Bortrifluorid-Monoäthylaminkomplexe, tertiäre Amine und ähnliche Verbindungen sein.

Die erfindungsgemässen Mischungen können in der üblichen Art und Weise hergestellt werden, indem man sie mittels Rührer, Kneter oder Roller verarbeitet.

Die erfindungsgemässen Mischungen werden im allgemeinen im Temperaturbereich von 175 bis 225°C gehärtet.

Der Ausdruck "härten", so wie er hier gebraucht wird, bedeutet die Ueberführung der obenerwähnten

Addukte und Epoxidmaterialien in unlösliche und nicht schmelzbare vernetzte Produkte, unter gleichzeitiger Formgebung, wobei geformte Artikel entstehen, beispielsweise Giesslinge, Presslinge oder Laminate, oder wobei zweidimensionale Strukturen entstehen, wie beispielsweise Beschichtungen, Lacke oder Klebverbindungen.

Die erfindungsgemässen Mischungen sind besonders brauchbar auf dem Gebiet des Oberflächenschutzes, in der elektrischen Industrie, bei Laminierverfahren und in der Bauindustrie. Sie können als Formulierungen eingesetzt werden, die von Fall zu Fall an den vorgesehenen Verwendungszweck angepasst sind, in gefüllter odr ungefüllter Form, gegebenenfalls als Lösungen oder Emulsionen, als Anstrichfarben, Sinterpulver, Pressmassen, Tauchharze, Giessharze, Spritzgussformulierungen, Imprägnierharze und Klebstoffe, als Werkstoffharze, Laminierharze, Verguss- und Füllstoffmassen, als Fussbodenbedeckungen oder als Bindemittel für mineralische Aggregate.

Von besonderem Interesse ist die Verwendung der erfindungsgemässen Mischungen zur Herstellung von Schutzschichten, wobei diese auf jede geeignete Unterlage in bekannter Weise durch sprayen, eintauchen, streichen oder aufwalzen hergestellt werden können. Nachdem die Beschichtungen die gewünschte Dicke erreicht haben, werden diese bei erhöhter Temperatur gehärtet. Die gehärteten Beschichtungen sind porenfrei und zeichnen sich durch hervorragende physikalische Eigenschaften und chemische Beständigkeiten aus. Verglichen mit den Standardepoxidharzen auf Basis von Bisphenol A und Epichlorhydrin zeichnen sich die erfindungsgemässen Epoxidharze durch eine unerwartete niedrigere Viskosität aus. Diese niedrigere Viskosität ermöglicht es, Beschichtungen mit höherem Feststoffanteil zu formulieren und den Anteil an Lösungsmittelemissionen zu verringern. Die aus den erfindungsgemässen Harzen hergestellten Beschichtungen weisen ausserdem eine unerwartet hohe Korrosionsbeständigkeit im Salzsprühtest auf, und die Haftfestigkeit und Flexibilität der Beschichtungen sind ebenfalls besser als solche auf Basis von konventionellen Bisphenol A-epoxidharzen.

Beispiel 1: Es werden typische, erfindungsgemässe, vorverlängerte Harze wie folgt hergestellt:

Der Diglycidyläther, Bisphenol A und der Katalysator werden in einen 2-Liter-Vierhalskolben gegeben, der mit einem mechanischen Rührer, Kühler, Thermometer und einem Temperaturregler ausgerüstet ist. Der Kolbeninhalt wird 30 Minuten mit Stickstoff gespült und anschliessend mittels eines Heizmantels stufenweise auf die gewünschte Reaktionstemperatur erhitzt. Man erhitzt 2 Stunden bei 130° C und anschliessend solange bei 180° C bis die Harze den theoretischen Epoxidwert aufweisen.

Mittels eines Abbrennlöffels werden aus dem Reaktionsgefäss regelmässig Proben entnommen und in 50 ml eines aus Benzylalkohol und Isopropanol (1:1) bestehenden Lösungsmittelgemisches gelöst. 5,0 ml einer frisch hergestellten Kaliumjodidlösung (3 g in 5 ml $H_2O$) werden zusammen mit 10 Tropfen einer 0,04 %-igen Bromphenolblaulösung der gelösten Probe zugegeben. Die erhaltene Mischung wird dann unter Rückfluss bis zum schwachgelben Endpunkt mit einer 1,0 N standardisierten HCl-Lösung titiert. Sobald das Harz den gewünschten Epoxidgehalt aufweist, wird mit dem Erhitzen aufgehört und das Harz Erkalten gelassen.

Die folgenden vorverlängerten Harze werden hergestellt:

| | Harz (Teile) | | | |
|---|---|---|---|---|
| | A | B | C | D |
| 2,2-Bis-[p-3(butoxy-2-glycidyloxypropyloxy)phenyl]-propan | 1000 | 1000 | 1000 | 1000 |
| Bisphenol A | 100 | 200 | 265 | 293 |
| Formylmethyltriphenylphosphoniumchlorid (Katalysator) | 0,1 | 0,1 | 0,1 | 0,1 |
| Endepoxidwert (Aeq./100 g) | 0,205 | 0,116 | 0,057 | 0,037 |
| Epoxidäquivalentgewicht | 488 | 862 | 1754 | 2703 |
| Brookfield-Viskosität bei 25°C (Pa.s) | 16 (100 % Festharz) | 0,065 (40 % Festharz in Butylcarbitol) | 0,200 | 0,275 |
| Gardner-Farbe (40 % Festharz in Butylcarbitol) | 1 | 1-2 | 3-4 | 4 |
| Anzahl der wiederkehrenden Struktureinheiten im vorverlängerten Epoxidharz | 1 | 4 | 7 | 9 |

Beispiel 2: Die vorverlängerten Harze gemäss Beispiel 1 werden zur Herstellung von härtbaren Beschichtungen verwendet. 30 Teile Harz, 1,87 Teile Hexamethoxymethylmelamin (Cymel® 303, Handelsprodukt der AMCY) als Härtungsmittel, 0,183 Teile p-Toluolsulfonsäure als Katalysator und 16 Teile eines aus Methyläthylketon, n-Butanol und Xylol bestehenden Lösungsmittelgemisches (Mischungsverhältnis 1:1:1). Die Formulierung weist einen Feststoffgehalt von 38,15 Gew.-% auf.

Aus den Formulierungen werden auf gewalztem Stahl 0,2 mm dicke Filme hergestellt, die während 60 Minuten bei 25°C getrocknet und dann 20 Minuten bei 200°C gehärtet werden. Die gehärteten Filme weisen folgende Eigenschaften auf:

Formulierungen

| | 1 | 2 | 3 |
|---|---|---|---|
| Harz | B | C | D |
| Aussehen des Filmes | klar glatt hochglänzend | klar glatt hochglänzend | klar glatt hochglänzend |
| Dicke (mm) | 0,037-0,044 | 0,037-0,063 | 0,03-0,063 |
| Härte nach. Persoz (sek.) | 72 | 309 | 274 |
| Schlagfestigkeit, frontal (cm.kg) | 184 | 74,8 | 69 |
| rückwärtig (cm.kg) | 184 | 28,8 | 184 |
| Bleistifthärte | 3B | 3H | F |
| Haftung (%) | 100 | 100 | 100 |

Beispiel 3: Vorverlängerte Harze werden hergestellt, indem man die Ausgangsverbindungen in den unten angegebenen Mengen solange auf 180°C erhitzt, bis das Harz den vorherbestimmten Epoxidgehalt aufweist.

| Harz | E | F | G |
|---|---|---|---|
| | (Teile) | (Teile) | (Teile) |
| 2,2-Bis-[p-3(butoxy-2-glycidyl-oxypropyloxy)phenyl]-propan | 1000 | 1000 | 1000 |
| Bisphenol A | 200 | 265 | 300 |
| Formylmethyltriphenylphos-phoniumchlorid (Katalysator) | 0,5 | 1,5 | 2,0 |
| Reaktionszeit (Stunden) | 8,0 | 14,0 | 14,0 |
| Endepoxidwert (Aeq./100 g) | 0,115 | 0,062 | 0,037 |
| Gardner Farbe | 2-3 | 6 | 6 |
| Anteil der im Harz enthaltenen wiederkehrenden Struktureinheiten | 4 | 7 | 9 |

Beispiel 4: Beispiel 2 wird wiederholt, wobei das dort verwendete Härtungsmittel durch im Handel unter der Bezeichnung "Resimene® 741, 747 und 797" erhältliche Melamin-Formaldehydharze (von Monsanto Chemical Co.) ersetzt wurde.

Harz (30 Teile; 55 Gewichts-% Festteile in einem Lösungsmittelgemisch aus Methyläthylketon/n-Butanol/Xylol (1:1:1)),
Resimene® 741 (21 Teile; 87 Gewichts-% Festteile in Isopropanol),
Resimene® 747 (1,87 Teile),
Resimene® 797 (2,01 Teile; 91 Gewichts-% Festteile in Aethanol) und
PTSA (0,183 Teile).

Die Filme werden wie in Beispiel 2 hergestellt. Die Eigenschaften der Filme sind in Tabellen I-III angegeben.

Tabelle I: Resimene® 741 als Härtungsmittel

| Harz | E | F | G |
|---|---|---|---|
| Aussehen des Filmes | klar hochglänzend glatt | klar hochglänzend glatt | klar hochglänzend glatt |
| Dicke (mm) | 0,037-0,05 | 0,05-0,063 | 0,037-0,063 |
| Härte nach Persoz (sek.) | 107 | 170 | 213 |
| Schlagfestigkeit, frontal (cm.kg) | 184 | 184 | 184 |
| rückwärtig (cm.kg) | 184 | 184 | 184 |
| Bleistifthärte | F | HB | 2H |
| Haftung (%) | 100 | 100 | 100 |

Tabelle II: Resimene® 747 als Härtungsmittel

| Harz | E | G |
|---|---|---|
| Aussehen des Filmes | klar hochglänzend geriffelt | klar hochglänzend geriffelt |
| Dicke (mm) | 0,037-0,05 | 0,056-0,063 |
| Härte nach Persoz (sek.) | 139 | 340 |
| Schlagfestigkeit, frontal (cm.kg) | 184 | 103,5 |
| rückwärtig (cm.kg) | 184 | 57,5 |
| Bleistifthärte | 2H | 2H |
| Haftung (%) | 100 | 100 |

Tabelle III: Resimene® 797 als Härtungsmittel

| Harz | E | F | G |
|---|---|---|---|
| Aussehen des Filmes | klar hochglänzend glatt | klar hochglänzend glatt | klar hochglänzend glatt |
| Dicke (mm) | 0,037-0,055 | 0,045-0,063 | 0,04-0,055 |
| Härte nach Persoz (sek.) | 47 | 192 | 302 |
| Schlagfestigkeit, | | | |
| frontal (cm.kg) | 86,25 | 184 | 184 |
| rückwärtig (cm.kg) | 126,5 | 184 | 184 |
| Bleistifthärte | 2B | F | 2H |
| Haftung (%) | 100 | 100 | 100 |

Beispiel 5: Vorverlängerte Epoxidharze werden wie die mit E, F und G bezeichneten hergestellt, mit der Ausnahme, dass nun als Katalysator ein Trifluormethansulfonsäuresalz (FC-520 der 3M) eingesetzt wird. Die erhaltenen Epoxidharze werden mit H, I und J bezeichnet. Diese Harze enthalten wiederkehrende Strukturelemente 4, 7 und 9 mal.

Die vorverlängerten Harze H, I und J werden wie in Beispiel 2 zur Herstellung von härtbaren Beschichtungen eingesetzt, wobei als Härtungsmittel nun ein flüssiges, butyliertes Bisphenol A-Formaldehyd-Harz mit einer Viskosität von durchschnittlich 170'000 MPa.s bei 25°C im Verhältnis von 1 Teil Härter auf 3 Teile Harz eingesetzt wird. Mittels Methyläthylketon wird aus der Formulierung eine Lösung hergestellt, die einen Feststoffgehalt von 55 Gewichts-% aufweist. Die Viskosität der Harzlösung wird dann mittels des Brookfield-Viskosimeters bei 25°C bestimmt.

| Harz | H | I | J |
|---|---|---|---|
| Viskosität der Harzlösung (Pa.s) | 0,100 | 0,100 | 0,150 |
| Erforderlicher Feststoffanteil in % um eine Harzlösung von 1,0 Pa.s zu erhalten | 70 | 70 | 70 |
| Gesamte Harzmenge (Gew.-%) | 63,6 | 63,6 | 63,6 |

Beispiel 6: Aus den härtbaren, in Beispiel 5 hergestellten Formulierungen werden 0,15 mm dicke Filme auf gewalztem Stahl gezogen, die nach einer Lufttrocknung von 30 Minuten bei 25°C dann während 20 Minuten bei 200°C gehärtet werden.

Die erhaltenen Filme weisen folgende Eigenschaften auf:

| Harz | H | I | J |
|---|---|---|---|
| Aussehen des Filmes | klar glatt | klar glatt | klar glatt |
| Dicke (mm) | 0,05 | 0,05 | 0,05 |
| Härte nach Persoz (sek.) | 209 | 320 | 330 |
| Schlagzähigkeit, | | | |
| frontal (cm.kg) | 184 | 184 | 184 |
| rückwärtig (cm.kg) | 53 | 46 | 32 |
| Bleistifthärte | 2H | 2H | 2H |
| Haftung (%) | 100 | 100 | 100 |

Beispiel 7: Die Oberflächenschutzeigenschaften der aus den erfindungsgemässen Formulierungen hergestellten Beschichtungen werden mittels des Salzsprühtests bestimmt und in einer Salzsprühkammer gemäss ASTM*)[1]B 117-73 durchgeführt, wobei der Prüfkörper dem Salzspray einer 5 Gewichts-%-igen, wässrigen NaCl-Lösung ausgesetzt wird. Als Prüfkörper werden die in den vorhergehenden Beispielen hergestellten Beschichtungen auf gewalztem Stahl verwendet. Die unbeschichteten Teile sowie die Ecken der Stahlplatte werden so abgedeckt, dass keine Feuchtigkeit unter der Beschichtung einsickert.

Nach periodischen Abständen werden die Prüfkörper visuell auf den Grad der Rostbildung (nicht, leicht, mittel und schwer) geprüft und es werden die Menge und Art der Blasen nach ASTM D714 (F=fein, M=mittel und D=dicht) bestimmt. Weisse Blasen zeigen im allgemeinen die Anwesenheit von Wasser an, während schwarze Blasen Anzeichen von Rost oder anderen Zersetzungsprozessen sind.

Mit einer Reissnadel wird die Beschichtung bis zur Stahlplatte eingekratzt gemäss ASTM D 1654-79a. Dann wird der Kratzweg, d.h. die Länge der Schichtentrennung vom Kratzpunkt abgemessen und die Oberflächenbeschaffenheit der Kratzstelle festgestellt.

Serie 1:
Härter: "CYMEL® 301" (alkyliertes Melamin-Formaldehydharz von AMCY),
Verhältnis von Harz zu Härter = 9:1,
Härtungsbedingungen: 20 Minuten bei 200°C
Salzsprühtest: 864 Stunden.

[1] *) ASTM = American Society for Testing and Materials

| Harz | Länge der Schichtentrennung (mm) | Blasen | Beschädigung durch Reissnadel |
|---|---|---|---|
| H | 8 | 2M (schwarz) | gering |
| I | 9 | 2F (schwarz) | gering |
| J | 9 | 2MD (schwarz) | gering |

Serie 2:
Härter: Bisphenol A-Formaldehyd-Harz mit einer durchschnittlichen Viskosität von 170'000 MPa.s bei 20°C
Verhältnis von Harz zu Härter = 3:1,
Härtungsbedingungen: 20 Minuten bei 200°C
Salzsprühtest: 864 Stunden.

| Harz | Länge der Schichtentrennung (mm) | Blasen | Beschädigung durch Reissnadel |
|---|---|---|---|
| H | 6 | 2F (schwarz) | gering |
| I | 6 | 8F (schwarz) | mässig |
| J | 6 | 8F (schwarz) | mässig |

Serie 3:
Härter: "CYMEL®300" (AMCY),
Verhältnis von Harz zu Härter = 9:1,
Härtungsbedingungen: 20 Minuten bei 200°C
Salzsprühtest: 864 Stunden.

| Harz | Länge der Schichtentrennung (mm) | Blasen | Beschädigung durch Reissnadel |
|---|---|---|---|
| H | 5 | 2F (schwarz) | gering |
| I | 4 | 2M (schwarz) | gering |

Serie 4:
Härter: "CYMEL®303" (AMCY)
Verhältnis von Harz zu Härter = 9:1,
Härtungsbedingungen: 20 Minuten bei 200°C
Salzsprühtest: 864 Stunden.

| Harz | Länge der Schichtentrennung (mm) | Blasen | Beschädigung durch Reissnadel |
|---|---|---|---|
| H | 15 | 2F (schwarz) | nicht |
| I | 7 | 2F (schwarz) | gering |
| J | 5 | 6M (schwarz) | gering |

Serie 5:
(analog Serie 4, ausser dass "CYMEL®350" eingesetzt wurde)

| Harz | Länge der Schichtentrennung (mm) | Blasen | Beschädigung durch Reissnadel |
|---|---|---|---|
| J | 8 | 2F (schwarz) | gering |

**Patentansprüche**

1. Vorverlängerte Epoxidharze, erhältlich durch Umsetzung von (1) Diglycidyläthern disekundärer Diole der Formel I

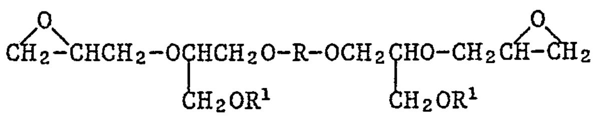 (I),

worin R ein Phenylen, Naphthylen oder einen zwei oder drei Phenylene enthaltenden Rest bedeutet, wobei die Phenylene über eine einfache Bindung, -O-, -S-, $-SO_2-$, -SO-, -CO- oder ein Alkylen mit 1 bis 5 C-Atomen gebunden sind und jedes Phenylen oder Naphthylen gegebenenfalls am Ring durch ein oder zwei Alkyle mit 1 bis 6 C-Atomen oder durch 1 oder 2 Chlor- oder Bromatome substituiert sein kann, und jedes $R^1$ ein lineares oder verzweigtes, gegebenenfalls durch 1 bis 4 Chlor- oder Bromatome substituiertes Alkyl mit 1 bis 16 C-Atomen, ein lineares oder verzweigtes, gegebenenfalls durch 1 bis 4 Chlor-oder Bromatome substituiertes Alkenyl mit 2 bis 6 C-Atomen, ein gegebenenfalls am Ring durch ein oder zwei Chlor- oder Bromatome oder 1 oder 2 Alkylene mit 1 bis 4 C-Atomen substituiertes Phenyl oder Naphthyl mit gesamthaft 6 bis 12 C-Atomen, ein gegebenenfalls am Ring durch 1 oder 2 Chlor- oder Bromatome oder 1 oder 2 Alkyle mit 1 bis 4 C-Atomen substituiertes Phenylalkyl oder Naphthylalkyl mit gesamthaft 7 bis 12 C-Atomen, ein einkerniges Cycloalkyl mit 3 bis 6 C-Atomen oder ein einkerniges Cycloalkylalkyl mit 4 bis 10 C-Atomen bedeutet, mit (2) zweiwertigen Phenolen.

2. Epoxidharze gemäss Anspruch 1, worin in Formel I beide $R^1$ die gleiche Bedeutung haben und je für ein Alkyl mit 1 bis 14 C-Atomen, Allyl, Cyclohexyl oder Benzyl stehen.

3. Epoxidharze gemäss Anspruch 1, worin in Formel I R einen Rest der Formel

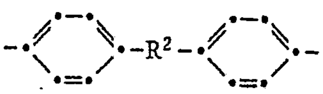

bedeutet, worin $R^2$ für Methylen oder Isopropylen steht und jedes $R^1$ ein Alkyl mit 1 bis 12 C-Atomen bedeutet.

4. Epoxidharze gemäss Anspruch 1, worin die Komponente (1) das 2,2-Bis-[p-3(butoxy-2-glycidyloxypropyloxy)phenyl]-propan ist.

5. Epoxidharze gemäss Anspruch 1, worin das zweiwertige Phenol der Formel II

HO-X-OH (II)

entspricht, worin X für 1,2-Phenylen, 1,3-Phenylen, 1,4-Phenylen oder einen Rest der Formel

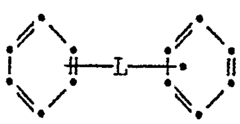

steht,worin L für eine direkte Bindung, ein Alkyken mit 1 bis 6 C-Atomen, ein Alkylidenl mit 2 bis 6 C-Atomen oder $-SO_2-$ steht.

6. Epoxidharze gemäss Anspruch 5, worin das zweiwertige Phenol Bisphenol A ist.

7. Epoxidharze gemäss Anspruch 1, enthaltend 70 bis 95 Gewichts-% die Komponente (1) und 30 bis 5 Gewichts-% die Komponente (2).

8. Epoxidharze gemäss Anspruch 1, worin die Komponente (1) aus 2,2-Bis-[p-3(butoxy-2-glycidyloxypropyloxy)phenyl]-propan und die Komponente (2) aus Bisphenol A besteht.

9. Heisshärtbare Mischung, enthaltend ein vorverlängertes Epoxidharz gemäss Anspruch 1 und ein Härtungsmittel für das Epoxidharz.

10. Mischung gemäss Anspruch 9, worin das Härtungsmittel ein Melamin-Formaldehydharz, ein Harnstoff-Formaldehydharz oder ein Phenol-Formaldehydharz ist.